(19) Europäisches Patentamt / European Patent Office / Office européen des brevets

(11) **EP 4 325 778 A1**

(12) **EUROPEAN PATENT APPLICATION**
published in accordance with Art. 153(4) EPC

(43) Date of publication:
**21.02.2024 Bulletin 2024/08**

(21) Application number: **21936484.1**

(22) Date of filing: **16.04.2021**

(51) International Patent Classification (IPC):
**H04L 25/02** *(2006.01)*

(52) Cooperative Patent Classification (CPC):
**H04L 25/02**

(86) International application number:
**PCT/CN2021/087901**

(87) International publication number:
**WO 2022/217609 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **CHEN, Dong**
**Beijing 100085 (CN)**

(74) Representative: **Hughes, Andrea Michelle**
**Dehns Germany**
**Theresienstraße 6-8**
**80333 München (DE)**

(54) **METHOD AND APPARATUS FOR DETERMINING SIGNAL DETECTION NETWORK**

(57) The present disclosure relates to a method and apparatus for determining a signal detection network. The method comprises: determining sample communication parameters of communication performed between a sample transmitting end and a sample receiving end by means of a sample intelligent reflecting surface (IRS) (S101); and training an initial neural network on the basis of a training sample set composed of the sample communication parameters, so as to obtain a signal detection network, wherein an input of the initial neural network is the sample communication parameters, and an output of the initial neural network is an estimated value of a transmitted signal of the sample transmitting end (S102). By means of the present disclosure, an initial neural network can be trained on the basis of a training sample set, so as to obtain a signal detection network. Since the neural network is not a linear algorithm, and the neural network is not limited to performing calculation on a linear relationship, same can be effectively used for signal detection even in a complex communication environment having many nonlinear factors, and can obtain a high-precision estimation result for a transmitted signal.

determining sample communication parameters in communication of a sample transmitting end and a sample receiving end via a sample intelligent reflecting surface (IRS) — S101

training an initial neural network based on a training sample set composed of the sample communication parameters to obtain the signal detection network, in which an input of the initial neural network is the sample communication parameters, and an output of the initial neural network is an estimated value for a transmitted signal of the sample transmitting end — S102

FIG. 1

**Description**

**TECHNICAL FIELD**

The present disclosure relates to the field of communication technology, and more particularly to a method for determining a signal detection network, an apparatus for determining a signal detection network, a communication device and a computer-readable storage medium.

**BACKGROUND**

When a base station communicates with a terminal, a receiving end needs to perform a signal detection on a transmitted signal from a transmitting end in order to perform a subsequent operation according to the transmitted signal determined by estimation.

Currently, a method for the signal detection mainly uses a linear algorithm, such as a minimum mean square error estimation (MMSE). Based on this method, a decoding matrix may be determined according to a channel matrix from the transmitting end to the receiving end, and then the transmitted signal from the transmitting end is estimated according to the decoding matrix and a receiving signal of the receiving end.

However, with a development of communication technology, a channel environment becomes increasingly complex during a communication process, and nonlinear factors in a channel are also increasing. The precision of the signal detection through the current linear algorithm is greatly affected, seriously affecting the accuracy of the signal detection.

**SUMMARY**

In view of this, embodiments of the present disclosure provide a method for determining a signal detection network, an apparatus for determining a signal detection network, a communication device and a computer-readable storage medium to solve technical problems in the related art.

According to a first aspect of embodiments of the present disclosure, a method for determining a signal detection network is provided, which includes: determining sample communication parameters in communication of a sample transmitting end and a sample receiving end via a sample intelligent reflecting surface (IRS); and training an initial neural network based on a training sample set composed of the sample communication parameters to obtain the signal detection network. An input of the initial neural network is the sample communication parameters, and an output of the initial neural network is an estimated value for a transmitted signal of the sample transmitting end.

In an embodiment, the sample communication parameters include at least one of: a first channel matrix from the sample transmitting end to the sample IRS; a phase matrix of the sample IRS; a second channel matrix from the sample IRS to the sample receiving end; a third channel matrix from the sample transmitting end to the sample receiving end; and a sample receiving signal of the sample receiving end.

In an embodiment, the initial neural network includes a plurality of cascaded update units, and inputs of the update unit include a unit-common input and a unit-related input. The method further includes: determining a relationship between the unit-related input and an updated value of the unit-related input according to a gradient descent process; and determining the unit-common input according to a parameter configured to represent the updated value in the relationship, and determining an output of the update unit according to the updated value. The output of the update unit is configured as a unit-related input of a cascaded next update unit.

In an embodiment, the update unit includes two unit-common inputs. A first unit-common input in the two unit-common inputs is determined based on the first channel matrix, the phase matrix, the second channel matrix and the third channel matrix. A second unit-common input in the two unit-common inputs is determined based on the first channel matrix, the phase matrix, the second channel matrix, the third channel matrix and the sample receiving signal.

In an embodiment, the update unit includes three fully connected layers, and the three fully connected layers include an input layer, a hidden layer and an output layer.

In an embodiment, the update unit further includes a short cut structure. A starting point of the short cut structure is the unit-related input, and an end point of the short cut structure is the hidden layer.

In an embodiment, network parameters of the fully connected layer include a unit-related weight, and the unit-related weight in at least some of the update units is related to a rank of the update unit in the plurality of cascaded update units. The higher the rank of the update unit in the plurality of cascaded update units, the greater the unit-related weight in the update unit.

In an embodiment, in the update unit with a rank higher than a preset order, the unit-related weight is a preset value. In the update unit with a rank lower than or equal to the preset order, the unit-related weight is less than the preset value, and the higher the rank of the update unit in the plurality of cascaded update units, the greater the unit-related weight in the update unit.

According to a second aspect of embodiments of the present disclosure, a signal detection method is provided, which includes: in response to receiving a receiving signal from an IRS, in which the receiving signal is a signal obtained by converting a transmitted signal sent from a transmitting end by the IRS, and determining the transmitted signal according to the signal detection network determined by the above method for determining the signal detection network.

According to a third aspect of embodiments of the present disclosure, an apparatus for determining a signal detection network is provided, which includes: a parameter determining module configured to determine sample communication parameters in communication of a sample transmitting end and a sample receiving end via a sample intelligent reflecting surface (IRS); and a network training module configured to train an initial neural network based on a training sample set composed of the sample communication parameters to obtain the signal detection network. An input of the initial neural network is the sample communication parameters, and an output of the initial neural network is an estimated value for a transmitted signal of the sample transmitting end.

In an embodiment, the sample communication parameters include at least one of: a first channel matrix from the sample transmitting end to the sample IRS; a phase matrix of the sample IRS; a second channel matrix from the sample IRS to the sample receiving end; a third channel matrix from the sample transmitting end to the sample receiving end; and a sample receiving signal of the sample receiving end.

In an embodiment, the initial neural network includes a plurality of cascaded update units, and inputs of the update unit include a unit-common input and a unit-related input. The apparatus further includes: a relationship determining module configured to determine a relationship between the unit-related input and an updated value of the unit-related input according to a gradient descent process; and an input-output determining module configured to determine the unit-common input according to a parameter configured to represent the updated value in the relationship, and determine an output of the update unit according to the updated value. The output of the update unit is configured as a unit-related input of a cascaded next update unit.

In an embodiment, the update unit includes two unit-common inputs. A first unit-common input in the two unit-common inputs is determined based on the first channel matrix, the phase matrix, the second channel matrix and the third channel matrix. A second unit-common input in the two unit-common inputs is determined based on the first channel matrix, the phase matrix, the second channel matrix, the third channel matrix and the sample receiving signal.

In an embodiment, three fully connected layers include an input layer, a hidden layer and an output layer.

In an embodiment, the update unit further includes a short cut structure. A starting point of the short cut structure is the unit-related input, and an end point of the short cut structure is the hidden layer.

In an embodiment, network parameters of the fully connected layer include a unit-related weight, and the unit-related weight in at least some of the update units is related to a rank of the update unit in the plurality of cascaded update units. The higher the rank of the update unit in the plurality of cascaded update units, the greater the unit-related weight in the update unit.

In an embodiment, in the update unit with a rank higher than a preset order, the unit-related weight is a preset value. In the update unit with a rank lower than or equal to the preset order, the unit-related weight is less than the preset value, and the higher the rank of the update unit in the plurality of cascaded update units, the greater the unit-related weight in the update unit.

According to a fourth aspect of embodiments of the present disclosure, a signal detection apparatus is provided, which includes: a signal estimating module configured to, in response to receiving a receiving signal from an IRS, in which the receiving signal is a signal obtained by converting a transmitted signal sent from a transmitting end by the IRS, determine the transmitted signal according to the signal detection network determined by the above apparatus for determining the signal detection network.

According to a fifth aspect of embodiments of the present disclosure, a communication device is provided, which includes: a processor; and a memory configured to store instructions executable by the processor. The processor is configured to implement the above method for determining the signal detection network.

According to a sixth aspect of embodiments of the present disclosure, a communication device is provided, which includes: a processor; and a memory configured to store computer programs. When the computer programs are executed by the processor, the above signal detection method is implemented.

According to a seventh aspect of embodiments of the present disclosure, a computer-readable storage medium is provided, for storing computer programs that, when executed by a processor, cause steps in the above method for determining the signal detection network to be implemented.

According to an eighth aspect of embodiments of the present disclosure, a computer-readable storage medium is provided, for storing computer programs that, when executed by a processor, cause steps in the above signal detection method to be implemented.

According to embodiments of the present disclosure, the initial neural network may be trained based on the training sample set to obtain the signal detection network. Since the neural network is not a linear algorithm, it is not limited to perform operations on linear relationships, even in a complex communication environment where there are many nonlinear factors, it can also be effectively used for the signal detection to obtain a high-precision estimation result for the transmitted signal.

In addition, since the training sample set is constructed based on the sample communication parameters in communication of the sample transmitting end and the sample receiving end via the sample IRS, the signal detection network obtained by training based on training samples is more suitable for a scenario where the receiving end communicates with the transmitting end via the IRS, and the signal detection may be accurately performed for this scenario.

## BRIEF DESCRIPTION OF THE DRAWINGS

In order to clearly illustrate the technical solutions in embodiments of the present disclosure, the accompanying drawings to be used in the description for embodiments of the present disclosure will be briefly introduced below. Apparently, the drawings in the following description only show some embodiments of the present disclosure. For those ordinarily skilled in the art, other drawings may also be obtained according to these drawings without any creative effort.

FIG. 1 is a schematic flow chart showing a method for determining a signal detection network according to embodiments of the present disclosure.

FIG. 2 is a schematic flow chart of applying the signal detection network according to embodiments of the present disclosure.

FIG. 3 is a schematic flow chart showing another method for determining a signal detection network according to embodiments of the present disclosure.

FIG. 4A is a schematic diagram showing a partial structure of an initial neural network according to embodiments of the present disclosure.

FIG. 4B is a schematic diagram showing a partial structure of another initial neural network according to embodiments of the present disclosure.

FIG. 5A is a schematic diagram showing a partial structure of an update unit according to embodiments of the present disclosure.

FIG. 5B is a schematic diagram showing a partial structure of another update unit according to embodiments of the present disclosure.

FIG. 5C is a schematic diagram showing a partial structure of another update unit according to embodiments of the present disclosure.

FIG. 6 is a schematic block diagram showing an apparatus for determining a signal detection network according to embodiments of the present disclosure.

FIG. 7 is a schematic block diagram showing another apparatus for determining a signal detection network according to embodiments of the present disclosure.

FIG. 8 is a schematic block diagram showing a device configured to determine a signal detection network according to embodiments of the present disclosure.

FIG. 9 is a schematic block diagram showing another device configured to determine a signal detection network according to embodiments of the present disclosure.

## DETAILED DESCRIPTION

The technical solutions in embodiments of the present disclosure will be described clearly and thoroughly below with reference to the accompanying drawings in embodiments of the present disclosure. Apparently, the described embodiments are only some embodiments of the present disclosure, rather than all embodiments of the present disclosure. All other embodiments obtained by those ordinarily skilled in the art based on embodiments of the present disclosure without making creative works belong to the protection scope of the present disclosure.

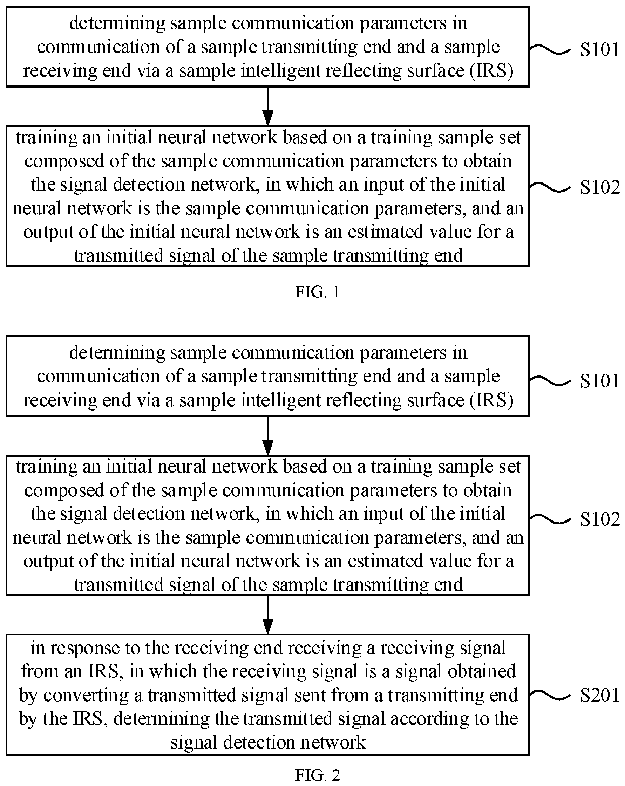

FIG. 1 is a schematic flow chart showing a method for determining a signal detection network according to embodiments of the present disclosure. The determination method shown in this embodiment may be used to determine the signal detection network. The signal detection network may be used by a receiving end to perform a signal detection. For example, after a transmitting end sends out a transmitted signal, the receiving end may receive a corresponding receiving signal, and the receiving end may estimate the transmitted signal based on the signal detection network.

In an embodiment, the transmitting end and the receiving end may be communication devices such as terminals, base stations, satellites, unmanned aerial vehicles, and core networks. In the following embodiments, the present disclosure will be illustrated with reference to an example where the transmitting end is the base station, and the receiving end is the terminal.

In an embodiment, the terminal includes, but is not limited to, a communication device such as a mobile phone, a tablet, a wearable device, a sensor, and an Internet of Things device. The terminal may communicate with the base station as a user equipment, and the base station includes, but is not limited to, a 4G base station, a 5G base station, and a 6G base station.

As shown in FIG. 1, the method for determining the signal detection network may include the following steps.

In step S101, sample communication parameters in communication of a sample transmitting end and a sample receiving end via a sample intelligent reflecting surface (IRS) are determined.

In step S102, an initial neural network is trained based on a training sample set composed of the sample communication parameters to obtain the signal detection network. An input of the initial neural network is the sample communication parameters, and an output of the initial neural network is an estimated value for a transmitted signal of the sample transmitting end.

In an embodiment, the transmitting end and the receiving end may communicate directly or communicate via the intelligent reflecting surface (IRS). The method for determining the signal detection network described in embodiments of the present disclosure may be applied in a scenario where the transmitting end and the receiving end communicate via the IRS.

The intelligent reflecting surface is a planar array composed of a large number of reconfigurable passive components. For an incident signal incident on the intelligent reflecting surface, each passive component may independently produce a certain phase shift on the incident signal, so that a reflected signal reflected by the intelligent reflecting surface changes in propagation characteristics, such as a phase, a direction, etc., relative to the incident signal.

In an embodiment, in order to obtain the signal detection network, the initial neural network and the training sample set may be constructed, and the initial neural network is trained based on the training sample set to obtain the signal detection network.

A deep learning algorithm used in a training process may be selected as needed. For example, an Adam optimization algorithm and an end-to-end learning method may be selected.

In an embodiment, a large number of sample transmitting ends, sample receiving ends, and sample IRSs may be predetermined, and then the sample transmitting ends are used to communicate with the sample receiving ends via the sample IRSs. That is, the transmitted signals of the sample transmitting ends may be transmitted to the sample receiving ends via the sample IRSs. In this case, the sample communication parameters in communications of the sample transmitting ends and the sample receiving ends via the sample IRSs may be determined, and the training sample set is formed based on these sample communication parameters.

In an embodiment, the sample communication parameters include at least one of:

a first channel matrix $\mathbf{H}_1$ from the sample transmitting end to the sample IRS;
a phase matrix $\Phi$ of the sample IRS;
a second channel matrix $\mathbf{H}_2$ from the sample IRS to the sample receiving end;
a third channel matrix $\mathbf{H}_3$ from the sample transmitting end to the sample receiving end; and
a sample receiving signal $\mathbf{y}$ of the sample receiving end.

These sample communication parameters are all known quantities to the sample receiving end. For example, the sample receiving signal y is a signal received by the sample receiving end from the sample transmitting end. The first channel matrix $\mathbf{H}_1$ and the second channel matrix $\mathbf{H}_2$ may be determined according to channel state information (CSI) of a channel used by the sample transmitting end to transmit a signal to the sample receiving end via the sample IRS. The third channel matrix $\mathbf{H}_3$ may be determined according to CSI of a channel used by the sample transmitting end to directly transmit a signal to the sample receiving end. The phase matrix $\Phi$ of the sample IRS may be determined before or during the communication between the transmitting end and the receiving end, and may be specifically determined according to a status of the passive components in the sample IRS.

According to embodiments of the present disclosure, the initial neural network may be trained based on the training sample set to obtain the signal detection network. Since the neural network is not a linear algorithm, it is not limited to perform operations on linear relationships, even in a complex communication environment where there are many nonlinear factors, it can also be effectively used for the signal detection to obtain a high-precision estimation result for the transmitted signal.

In addition, since the training sample set is constructed based on the sample communication parameters in communication of the sample transmitting end and the sample receiving end via the sample IRS, the signal detection network obtained by training based on training samples is more suitable for a scenario where the receiving end communicates with the transmitting end via the IRS, and the signal detection may be accurately performed for this scenario.

In an embodiment, before the training, data in the training sample set may also be divided into three sets. A first set is used as a sample set for the training, a second set is used as a test set for testing a training result, and a third set is used as a validation set for verifying the training result. For example, a ratio of samples in the first set, the second set, and the third set may be 96:2:2.

FIG. 2 is a schematic flow chart of applying the signal detection network according to embodiments of the present disclosure. As shown in FIG. 2, in step S201, in response to the receiving end receiving a receiving signal from an IRS, the receiving signal being a signal obtained by converting a transmitted signal sent from a transmitting end by the IRS, the transmitted signal is determined according to the signal detection network.

In an embodiment, after the signal detection network is determined, in a subsequent scenario where the receiving end and the transmitting end actually perform the communication via the IRS, the signal detection may be performed via the signal detection network to determine the transmitted signal sent by the transmitting end.

For example, after the IRS adjusts its passive components every time, an entire phase matrix of the IRS may be informed to the receiving end, so that the receiving end may determine the phase matrix of the IRS. The receiving end may also determine the channel matrix from the transmitting end to the IRS and the channel matrix from the IRS to the receiving end according to the channel state information of the channel used by the transmitting end to transmit the signal to the receiving end via the IRS, and determine the channel matrix from the sample transmitting end to the sample receiving end according to the channel state information of the channel used by the transmitting end to transmit the signal directly to the receiving end. The receiving end may then determine an input quantity based on the receiving signal received, the above phase matrix and the three channel matrices, and input the input quantity into the signal detection network determined in the above embodiments to obtain an estimated value for the transmitted signal of the transmitting end.

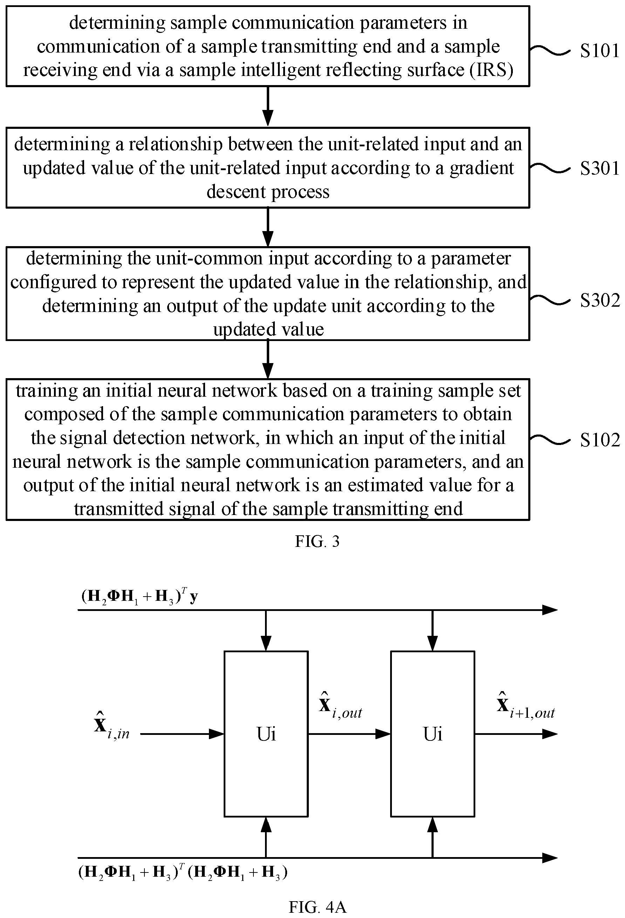

FIG. 3 is a schematic flow chart showing another method for determining a signal detection network according to embodiments of the present disclosure. As shown in FIG. 3, in some embodiments, the initial neural network includes a plurality of cascaded update units, and inputs of the update unit include a unit-common input and a unit-related input.

The method further includes:

in step S301, determining a relationship between the unit-related input and an updated value of the unit-related input according to a gradient descent process; and
in step S302, determining the unit-common input according to a parameter configured to represent the updated value in the relationship, and determining an output of the update unit according to the updated value.

The output of the update unit is configured as a unit-related input of a cascaded next update unit.

In an embodiment, the plurality of cascaded update units may be set up to compose the initial neural network, and the inputs of the update unit include the unit-common input and the unit-related input. The unit-common input remains unchanged as an input of each update unit. The unit-related input varies based on the update unit.

In an embodiment, the output of the update unit may be an updated value of the unit-related input of the update unit based on the gradient descent process. For example, for an i-th update unit in n + 1 update units, the unit-related input is $\mathbf{x}_i$, and the output is $\mathbf{x}_{i+1}$, where $n \geq 0$, and $0 \leq i \leq n$.

A relationship between a receiving signal x received by a receiving end and a transmitted signal **y** sent by a transmitting end is:

$$\mathbf{y} = \mathbf{Hx} + \mathbf{n};$$

where **n** is a Gaussian white noise, which belongs to a random variable, and **H** is a channel matrix.

When considering that the transmitting end and the receiving end communicate via an IRS, for example, a sample transmitting end communicates with a sample receiving end via a sample IRS, the channel matrix **H** in the above formula may be determined according to a first channel matrix $\mathbf{H}_1$ from the sample transmitting end to the sample IRS, a phase matrix $\Phi$ of the sample IRS, a second channel matrix $\mathbf{H}_2$ from the sample IRS to the sample receiving end, and the third channel matrix $\mathbf{H}_3$ from the sample transmitting end to the sample receiving end:

$$\mathbf{H} = \mathbf{H}_2\mathbf{\Phi}\mathbf{H}_1 + \mathbf{H}_3.$$

Then,

$$\mathbf{y} = (\mathbf{H}_2\mathbf{\Phi}\mathbf{H}_1 + \mathbf{H}_3)\mathbf{x} + \mathbf{n}.$$

Since in practical applications, the receiving end cannot directly determine the transmitted signal **x,** but needs to estimate $\hat{\mathbf{x}}$ through the signal detection. Embodiments of the present disclosure are mainly intended to obtain $\hat{\mathbf{x}}$, so that a difference between **x** and $\hat{\mathbf{x}}$ is as small as possible.

In order to find $\hat{\mathbf{x}}$ that is closer to $\mathbf{x}$, $\hat{\mathbf{x}}$ may be updated according to the gradient descent process. In embodiments of the present disclosure, the input $\hat{\mathbf{x}}$ is updated through the update unit. For example, for the i-th update unit, $\hat{\mathbf{x}}_i$ may be updated to obtain $\hat{\mathbf{x}}_{i+1}$, which is closer to the transmitted signal $\mathbf{x}$ actually sent by the transmitting end relative to $\hat{\mathbf{x}}$.

Based on the gradient descent process, a relationship between $\hat{\mathbf{x}}_{i+1}$ and $\hat{\mathbf{x}}$ is:

$$\hat{\mathbf{x}}_{i+1}=\hat{\mathbf{x}}_i-\eta_i\frac{\partial\left\|\mathbf{y}-(\mathbf{H}_2\mathbf{\Phi}\mathbf{H}_1+\mathbf{H}_3)\right\|}{\partial\mathbf{x}}\qquad\text{(formula 1)},$$

where $\mathbf{x}=\hat{\mathbf{x}}_i$, $\eta_i$ is a step size to update $\hat{\mathbf{x}}_i$ for the i-th update unit, and $\hat{\mathbf{x}}_0$ is a preset value as needed.

Expanding the formula 1, the relationship between $\hat{\mathbf{x}}_{i+1}$ and $\hat{\mathbf{x}}_i$ is obtained as follows:

$$\hat{\mathbf{x}}_{i+1}=\hat{\mathbf{x}}_i-2\eta_i(\mathbf{H}_2\mathbf{\Phi}\mathbf{H}_1+\mathbf{H}_3)^T\mathbf{y}+2\eta_i(\mathbf{H}_2\mathbf{\Phi}\mathbf{H}_1+\mathbf{H}_3)^T(\mathbf{H}_2\mathbf{\Phi}\mathbf{H}_1+\mathbf{H}_3)\hat{\mathbf{x}}_i\qquad\text{(formula 2)}.$$

Based on the formula 2, it may be seen that updating $\hat{\mathbf{x}}_i$ by the i-th update unit to obtain $\hat{\mathbf{x}}_{i+1}$ requires operations based on three quantities $\hat{\mathbf{x}}_i$, $(\mathbf{H}_2\Phi\mathbf{H}_1+\mathbf{H}_3)^T\mathbf{y}$ and $(\mathbf{H}_2\Phi\mathbf{H}_1+\mathbf{H}_3)^T(\mathbf{H}_2\Phi\mathbf{H}_1+\mathbf{H}_3)$, so these three quantities may be used as input quantities of the i-th update unit. $(\mathbf{H}_2\Phi\mathbf{H}_1+\mathbf{H}_3)^T\mathbf{y}$ and $(\mathbf{H}_2\Phi\mathbf{H}_1+\mathbf{H}_3)^T(\mathbf{H}_2\Phi\mathbf{H}_1+\mathbf{H}_3)$ do not change with i, and are the same for each update unit, so they may be used as the unit-common input, while $\hat{\mathbf{x}}_i$ will change with i and is different for the each update unit, so it may be used as the unit-related input.

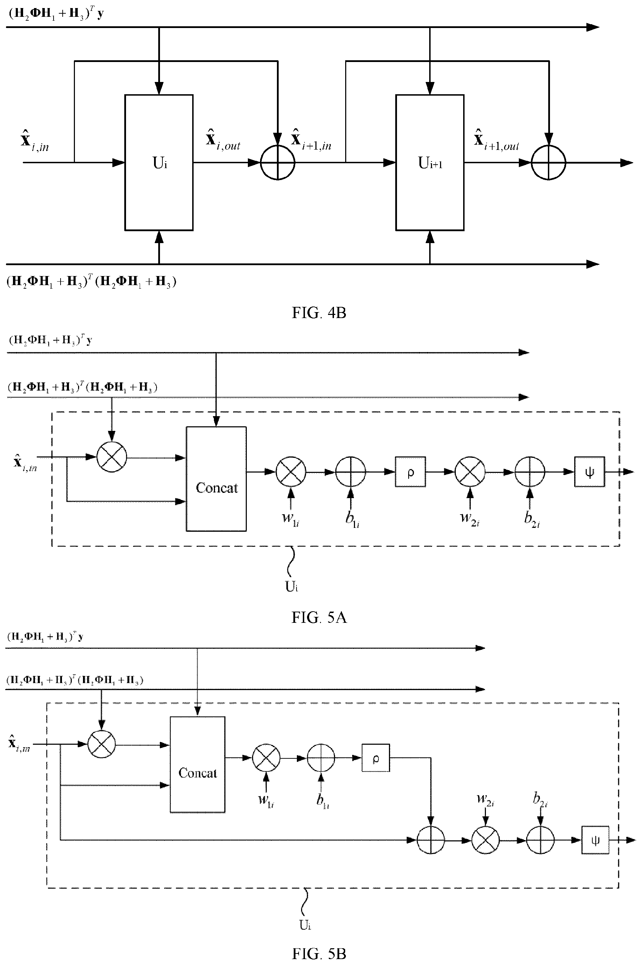

FIG. 4A is a schematic diagram showing a partial structure of an initial neural network according to embodiments of the present disclosure. FIG. 4B is a schematic diagram showing a partial structure of another initial neural network according to embodiments of the present disclosure.

As shown in FIG. 4A, for the i-th update unit Ui, the input is $\hat{\mathbf{x}}_{i,in}$, the output is $\hat{\mathbf{x}}_{i,out}$, and $\hat{\mathbf{x}}i$,out may be directly used as an input $\hat{\mathbf{x}}_{i+1,in}$ of a next update unit, i.e., an i+1-th update unit $U_{i+1}$, and so on, until $\hat{\mathbf{x}}_{n,out}$ is obtained.

As shown in FIG. 4B, on the basis of the structure shown in FIG. 4A, the input $\hat{\mathbf{x}}_{i,in}$ and the output $\hat{\mathbf{x}}_{i,out}$ of the i-th update unit Ui may also be weighted and summed (a weight used for each update unit may be preset as needed), and a weighted summation result is used as the input $\hat{\mathbf{x}}_{i+1,in}$ of the i+1-th update unit $U_{i+1}$. Although the structure shown in FIG. 4B is more complicated than the structure shown in FIG. 4A, more factors from a previous unit can be introduced in the input of the update unit, helping to avoid a large updating quantity in each time to cause a seriously deviation from an expected value.

In an embodiment, the update unit includes two unit-common inputs.

A first unit-common input in the two unit-common inputs is determined based on the first channel matrix, the phase matrix, the second channel matrix and the third channel matrix, for example, $(\mathbf{H}_2\Phi\mathbf{H}_1+\mathbf{H}_3)^T(\mathbf{H}_2\Phi\mathbf{H}_1+\mathbf{H}_3)$ in the above formula 2.

A second unit-common input in the two unit-common inputs is determined based on the first channel matrix, the phase matrix, the second channel matrix, the third channel matrix and the sample receiving signal, for example, $(\mathbf{H}_2\Phi\mathbf{H}_1+\mathbf{H}_3)^T\mathbf{y}$ in the above formula 2.

According to embodiments of the present disclosure, each update unit in the initial neural network only requires three inputs, that is, the number of inputs is small, so that the number of connections in the network is small, which is beneficial to reducing a complexity of the network, and the network may also output the result faster even used in a complex channel environment.

FIG. 5A is a schematic diagram showing a partial structure of an update unit according to embodiments of the present disclosure. In some embodiments, the update unit includes three fully connected layers, and the three fully connected layers include an input layer, a hidden layer and an output layer.

In an embodiment, the update unit may be designed to include three fully connected layers, and the three fully connected layers may specifically include an input layer, a hidden layer, and an output layer.

As shown in FIG. 5A, as an example, the input layer and the hidden layer in the i-th update unit $U_i$ are shown. A weight corresponding to the input layer is $w_{i1}$, a bias corresponding to the input layer is $b_{i1}$, and an activation function corresponding to the input layer is $\rho$. A weight corresponding to the hidden layer is $w_{i2}$, a bias corresponding to the hidden layer is $b_{i2}$, and an activation function corresponding to the hidden layer is $\psi$.

An input of the input layer is mainly determined according to a transmitted signal. Concat refers to a concatenation method, and strings, arrays, vectors, etc., input into the concatenation method may be concatenated. $\hat{\mathbf{x}}_{i,in}$, a product of $(\mathbf{H}_2\Phi\mathbf{H}_1+\mathbf{H}_3)^T(\mathbf{H}_2\Phi\mathbf{H}_1+\mathbf{H}_3)$ and $\hat{\mathbf{x}}_{i,in}$, and $(\mathbf{H}_2\Phi\mathbf{H}_1+\mathbf{H}_3)^T\mathbf{y}$ may be input into the Concat, and a concatenation result of the three quantities may be obtained.

For example, the number of antennas at the transmitting end is $M$ (known to the receiving end), and the transmitted signal may be an $M*1$ vector. Correspondingly, $\hat{\mathbf{x}}_{i,in}$ is an $M*1$ vector, the product of $(\mathbf{H}_2\Phi\mathbf{H}_1+\mathbf{H}_3)^T(\mathbf{H}_2\Phi\mathbf{H}_1+\mathbf{H}_3)$ and $\hat{\mathbf{x}}_{i,in}$ is also an $M*1$ vector, and $(\mathbf{H}_2\Phi\mathbf{H}_1+\mathbf{H}_3)^T\mathbf{y}$ is also an $M*1$ vector, then the concatenation result of the three quantities is a $3M*1$ vector, so the number of inputs of the input layer may be set to $3M*1$.

The input is multiplied by $w_{i1}$ added with $b_{i1}$, and subjected to the activation function $\rho$ successively in the input layer, and a result obtained thereby is output to the hidden layer. The activation function $\rho$ may be a sigmod function.

The number of inputs of the hidden layer may be set as needed, and is generally greater than or equal to the number of inputs of the input layer, for example, the number of inputs of the hidden layer may be $4M*1$. The inputs are multiplied by $w_{i2}$, added with $b_{i2}$, and subjected to the activation function $\psi$ successively in the hidden layer, and then output to the output layer. The activation function $\psi$ may be a tanh function.

The number of outputs from the output layer is $M*1$, which may form an $M*1$ vector and be input to the next update unit.

It should be noted that the activation functions are not limited to examples in the above embodiments, and may be selected specifically as needed. For example, a relu function may also be selected as the activation function.

FIG. 5B is a schematic diagram showing a partial structure of another update unit according to embodiments of the present disclosure. As shown in FIG. 5B, in some embodiments, the update unit further includes a short cut structure. A starting point of the short cut structure is the unit-related input, and an end point of the short cut structure is the hidden layer.

In an embodiment, relying only on the fully connected network, it is difficult to fully exploit a nonlinear relationship in a complex channel environment during a training process. Therefore, as shown in FIG. 5B, on the basis of the update unit shown in FIG. 5A, the short cut (also referred to as direct connection, shortcut) structure may be added to the fully connection layer. The starting point of the short cut structure is the unit-related input, and the end point is the hidden layer. That is, $\hat{\mathbf{x}}_{i,in}$ may be added with an output from the input layer through either direct addition or weighted summation, and a result obtained thereby is used as the input to the hidden layer.

Accordingly, it is convenient to fully explore the nonlinear relationship in the complex channel environment during the training process, may alleviate a gradient divergence effect caused by the cascade of the plurality of update units, and is beneficial to ensuring a rationality of a training result.

In addition, based on the above embodiments, it may be seen that the relationship between $\hat{\mathbf{x}}_{i+1}$ and $\hat{\mathbf{x}}_i$ is composed of three items, two of which include $\hat{\mathbf{x}}_i$. Therefore, compared with other inputs, $\hat{\mathbf{x}}_i$ has a greater impact on $\hat{\mathbf{x}}_{i+1}$. By adding a short cut in the fully connected layer, $\hat{\mathbf{x}}_i$ (i.e., $\hat{\mathbf{x}}_{i,in}$) is not only configured as an initial input of the fully connected layer, but also as the input to the hidden layer in the fully connected layer, ensuring that $\hat{\mathbf{x}}_i$ may have a greater impact in the update unit, which is more consistent with the relationship between $\hat{\mathbf{x}}_{i+1}$ and $\hat{\mathbf{x}}_i$, and is also beneficial to ensuring the rationality of the training result.

In an embodiment, by training the initial neural network composed of the cascade of the update units in the above embodiments based on the training sample set, the signal detection network may be obtained.

A deep learning algorithm used in the training process may be selected as needed, for example, an Adam optimization algorithm and an end-to-end learning method may be selected. A loss function used in the training process may also be set as needed. For example, it may be set to $\sum_{i=1}^{n} \lg i \left\| \mathbf{x} - \hat{\mathbf{x}}_i \right\|^2$, that is, from i = 1 to i = n, $\|\mathbf{x}\text{-}\hat{\mathbf{x}}_i\|^2$ is weighted and summed, and a weight value is lg $i$.

In some embodiments, network parameters of the fully connected layer include a unit-related weight, and the unit-related weight in at least some of the update units is related to a rank of the update unit in the plurality of cascaded update units. The higher the rank of the update unit in the plurality of cascaded update units, the greater the unit-related weight in the update unit, and the lower the rank of the update unit in the plurality of cascaded update units, the smaller the unit-related weight in the update unit.

In an embodiment, the unit-related weight, i.e., a weight related to the update unit, may be introduced in the input layer of the update unit.

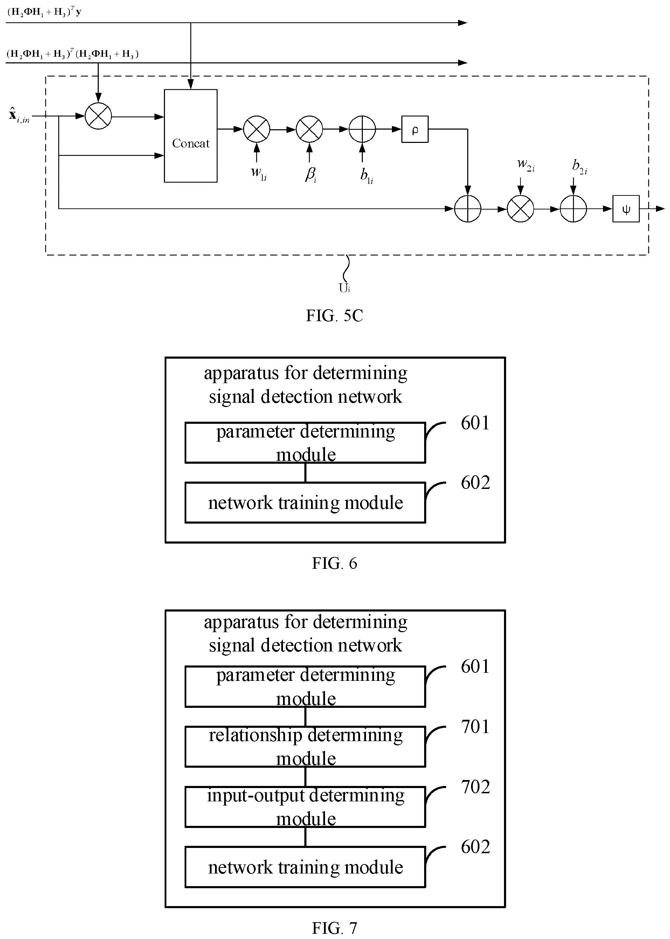

FIG. 5C is a schematic diagram showing a partial structure of another update unit according to embodiments of the present disclosure. As shown in FIG. 5C, a unit-related weight of the i-th update unit Ui is $\beta_i$. For at least some of the update units, the higher the rank of Ui in n cascaded update units, that is, the smaller the i, the greater the $\beta_i$.

It should be noted that a position of the unit-related weight $\beta_i$ in the fully connected layer may be set as needed. Generally, it may be set in the input layer and/or the hidden layer. For example, if it is set in the input layer, as shown in FIG. 5C, it may be set after $w_{i1}$ to multiply with the product of the input and $w_{i1}$ in the input layer. If it is set in the hidden layer, it may be set after $w_{i2}$ to multiply with the product of the input and $w_{i2}$ in the hidden layer.

When updating $\hat{\mathbf{x}}_i$ based on a gradient descent algorithm, an earlier update has a greater impact on an entire update process than a later update. Therefore, when updating $\hat{\mathbf{x}}_i$ via the plurality of update units, a relative large unit-related weight may be set for an update unit with a higher rank, while a relative small unit-related weight may be set for an update unit with a lower rank, which is beneficial to reducing a complexity of the training process.

It should be noted that the contents about the unit-related weight are not limited to as shown in FIG. 5C, which may be applied on the basis of embodiments shown in FIG. 5B, and may also be directly applied on the basis of embodiments shown in FIG. 5A.

In an embodiment, in the update unit with a rank higher than a preset order, the unit-related weight is a preset value. In the update unit with a rank lower than or equal to the preset order, the unit-related weight is less than the preset value, and the higher the rank of the update unit in the plurality of cascaded update units, the greater the unit-related weight in the update unit, and the lower the rank of the update unit in the plurality of cascaded update units, the smaller the unit-related weight in the update unit.

In an embodiment, the unit-related weight may be set to remain unchanged for some update units, and change with the rank only for another part of the update units. For example, for the update units with the rank higher than the preset order, the unit-related weight remains unchanged as the preset value, and for the update units with the rank lower than or equal to the preset order, the unit-related weight may be set to decrease as the rank becomes lower.

Accordingly, on the basis of ensuring an importance of the update units with the higher rank, changes in some unit-related weights may be reduced, which is beneficial to reducing the complexity of the training process.

For example, the unit-related weight $\beta_i$ may be a semi-exponential function of the rank i of updates unit, and its form may be shown as follow:

$$\beta_i = \begin{cases} 1, & i < \dfrac{n}{2} \\ \exp(\dfrac{n}{2} - i - 1), & i \geq \dfrac{n}{2} \end{cases}.$$

That is, in n update units, the unit-related weights in a first half of the update units may remain unchanged, while the unit-related weights in a second half of the update units may decrease as the rank i of the update unit becomes lower.

Embodiments of the present disclosure also provide a signal detection method, which may be performed by a receiving end during a communication process between a transmitting end and the receiving end.

In an embodiment, the transmitting end and the receiving end may be communication devices such as terminals, base stations, satellites, unmanned aerial vehicles, and core networks. For example, during the communication process between the base station and the terminal, the receiving end may be either the base station or the terminal. For example, when the transmitting end is the base station, the receiving end is the terminal, and when the transmitting end is the terminal, the receiving end is the base station.

In an embodiment, the terminal includes, but is not limited to, a communication device such as a mobile phone, a tablet, a wearable device, a sensor, and an Internet of Things device. The terminal may communicate with the base station as a user equipment, and the base station includes, but is not limited to, a 4G base station, a 5G base station, and a 6G base station.

The signal detection method may include a following step.

In response to receiving a receiving signal from an IRS, in which the receiving signal is a signal obtained by converting a transmitted signal sent from the transmitting end by the IRS, the transmitted signal is determined according to the signal detection network determined by the method described in any one of the above embodiments.

In an embodiment, after the signal detection network is determined based on the foregoing embodiments, in a subsequent scenario where the receiving end and the transmitting end actually perform the communication via the IRS, the signal detection may be performed via the signal detection network to determine the transmitted signal sent by the transmitting end.

For example, after the IRS adjusts its passive components every time, an entire phase matrix of the IRS may be informed to the receiving end, so that the receiving end may determine the phase matrix of the IRS. The receiving end may also determine the channel matrix from the transmitting end to the IRS and the channel matrix from the IRS to the receiving end according to the channel state information of the channel used by the transmitting end to transmit the signal to the receiving end via the IRS, and determine the channel matrix from the sample transmitting end to the sample receiving end according to the channel state information of the channel used by the transmitting end to transmit the signal directly to the receiving end. The receiving end may then determine input quantities (for example, input quantities corresponding to the three input quantities of embodiments shown in FIG. 4A and FIG. 4B) based on the receiving signal received, the above phase matrix and the three channel matrices, and input the input quantities into the signal detection network determined in the above embodiments to obtain an estimated value for the transmitted signal of the transmitting end.

It should be noted that the operation for determining the signal detection network may be performed by the receiving end or by other devices, which is not limited by embodiments of the present disclosure. For example, if it is performed by other devices, after the signal detection network is obtained, the signal detection network may be sent to the receiving end.

Corresponding to the foregoing embodiments of the method for determining the signal detection network, the present disclosure also provides embodiments of an apparatus for determining the signal detection network.

FIG. 6 is a schematic block diagram showing an apparatus for determining a signal detection network according to embodiments of the present disclosure. The determination apparatus shown in this embodiment may be used to determine the signal detection network. The signal detection network may be used by a receiving end to perform a signal detection. For example, after a transmitting end sends out a transmitted signal, the receiving end may receive a corresponding receiving signal, and the receiving end may estimate the transmitted signal based on the signal detection network.

In an embodiment, the transmitting end and the receiving end may be communication devices such as terminals, base stations, satellites, unmanned aerial vehicles, and core networks. In the following embodiments, the present disclosure will be illustrated with reference to an example where the transmitting end is the base station, and the receiving end is the terminal.

In an embodiment, the terminal includes, but is not limited to, a communication device such as a mobile phone, a tablet, a wearable device, a sensor, and an Internet of Things device. The terminal may communicate with the base station as a user equipment, and the base station includes, but is not limited to, a 4G base station, a 5G base station, and a 6G base station.

As shown in FIG. 6, the apparatus for determining the signal detection network may include: a parameter determining module 601 configured to determine sample communication parameters in communication of a sample transmitting end and a sample receiving end via a sample intelligent reflecting surface (IRS); and a network training module 602 configured to train an initial neural network based on a training sample set composed of the sample communication parameters to obtain the signal detection network. An input of the initial neural network is the sample communication parameters, and an output of the initial neural network is an estimated value for a transmitted signal of the sample transmitting end.

In some embodiments, the sample communication parameters include at least one of: a first channel matrix from the sample transmitting end to the sample IRS; a phase matrix of the sample IRS; a second channel matrix from the sample IRS to the sample receiving end; a third channel matrix from the sample transmitting end to the sample receiving end; and a sample receiving signal of the sample receiving end.

FIG. 7 is a schematic block diagram showing another apparatus for determining a signal detection network according to embodiments of the present disclosure. As shown in FIG. 7, the initial neural network includes a plurality of cascaded update units, and inputs of the update unit include a unit-common input and a unit-related input.

The apparatus further includes: a relationship determining module 701 configured to determine a relationship between the unit-related input and an updated value of the unit-related input according to a gradient descent process; and an input-output determining module 702 configured to determine the unit-common input according to a parameter configured to represent the updated value in the relationship, and determine an output of the update unit according to the updated value. The output of the update unit is configured as a unit-related input of a cascaded next update unit.

In some embodiments, the update unit includes two unit-common inputs. A first unit-common input in the two unit-common inputs is determined based on the first channel matrix, the phase matrix, the second channel matrix and the third channel matrix. A second unit-common input in the two unit-common inputs is determined based on the first channel matrix, the phase matrix, the second channel matrix, the third channel matrix and the sample receiving signal.

In some embodiments, the update unit includes three fully connected layers, and the three fully connected layers include an input layer, a hidden layer and an output layer.

In some embodiments, the update unit further includes a short cut structure. A starting point of the short cut structure is the unit-related input, and an end point of the short cut structure is the hidden layer.

In some embodiments, network parameters of the fully connected layer include a unit-related weight, and the unit-related weight in at least some of the update units is related to a rank of the update unit in the plurality of cascaded update units. The higher the rank of the update unit in the plurality of cascaded update units, the greater the unit-related weight in the update unit, and the lower the rank of the update unit in the plurality of cascaded update units, the smaller the unit-related weight in the update unit.

In some embodiments, in the update unit with a rank higher than a preset order, the unit-related weight is a preset value.

In the update unit with a rank lower than or equal to the preset order, the unit-related weight is less than the preset value, and the higher the rank of the update unit in the plurality of cascaded update units, the greater the unit-related weight in the update unit, and the lower the rank of the update unit in the plurality of cascaded update units, the smaller the unit-related weight in the update unit.

Embodiments of the present disclosure also provide a signal detection apparatus, which may be applied to a receiving end during a communication process between a transmitting end and the receiving end.

In an embodiment, the transmitting end and the receiving end may be communication devices such as terminals, base stations, satellites, unmanned aerial vehicles, and core networks. For example, during the communication process between the base station and the terminal, the receiving end may be either the base station or the terminal. For example, when the transmitting end is the base station, the receiving end is the terminal, and when the transmitting end is the terminal, the receiving end is the base station.

In an embodiment, the terminal includes, but is not limited to, a communication device such as a mobile phone, a tablet, a wearable device, a sensor, and an Internet of Things device. The terminal may communicate with the base station as a user equipment, and the base station includes, but is not limited to, a 4G base station, a 5G base station, and a 6G base station.

The signal detection apparatus may include: a signal estimating module.

The signal estimating module is configured to, in response to receiving a receiving signal from an IRS, in which the receiving signal is a signal obtained by converting a transmitted signal sent from a transmitting end by the IRS, determine the transmitted signal according to the signal detection network determined by the apparatus described in any one of the above embodiments.

With respect to the apparatuses in the above embodiments, specific manners for individual modules to perform operations have been described in detail in the embodiments related to the methods of the present disclosure, which will not be elaborated herein.

Since the apparatus embodiments substantially correspond to the method embodiments, reference may be made to the description of the method embodiments for relevant parts. The above-described apparatus embodiments are merely for the purpose of illustration, in which the modules described as separate components may be or may not be physically separated, and the components displayed as modules may be or may not be physical modules, that is, they may be either located at one place or distributed onto a plurality of network modules. The object of embodiments of the present disclosure may be achieved by some or all of the modules in accordance with practical requirements, which would be appreciated and executable by those skilled in the art without creative efforts.

Embodiments of the present disclosure also provide a communication device, which includes: a processor; and a memory configured to store computer programs. When the computer programs are executed by the processor, the method for determining the signal detection network described in any one of the above embodiments is implemented.

Embodiments of the present disclosure also provide a communication device, which includes: a processor; and a memory configured to store computer programs. When the computer programs are executed by the processor, the signal detection method described in the above embodiments is implemented.

Embodiments of the present disclosure also provide a computer-readable storage medium configured to store computer programs that, when executed by a processor, cause steps in the method for determining the signal detection network described in any one of the above embodiments to be implemented.

Embodiments of the present disclosure also provide a computer-readable storage medium configured to store computer programs that, when executed by a processor, cause steps in the signal detection method described in the above embodiments to be implemented.

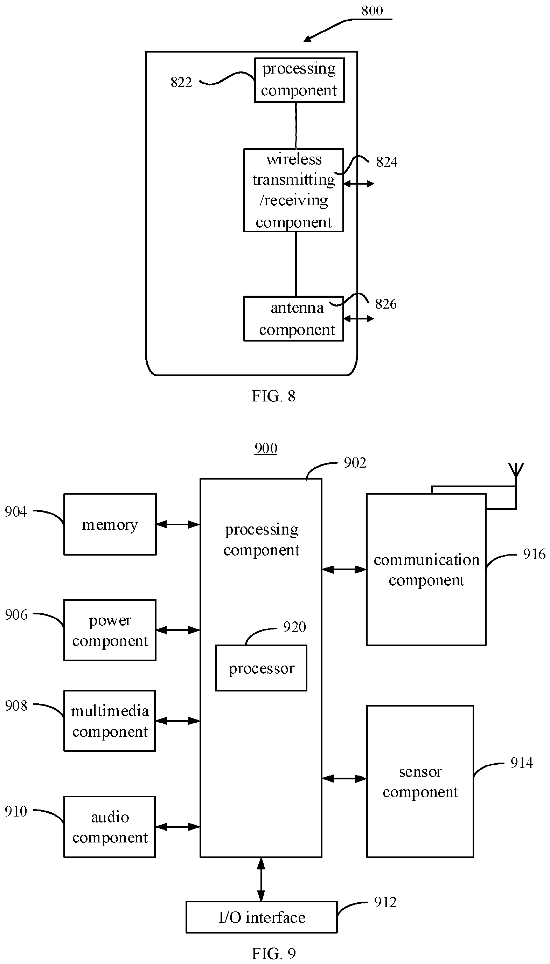

As shown in FIG. 8, FIG. 8 is a schematic block diagram showing another device 800 configured to determine a signal detection network according to embodiments of the present disclosure. The device 800 may be provided as a base station. Referring to FIG. 8, the device 800 includes a processing component 822, a wireless transmitting/receiving component 824, an antenna component 826, and a signal processing part specific to a wireless interface. The processing component 822 may further include one or more processors. One of the processors in the processing component 822 may be configured to implement the method for determining the signal detection network described in any one of the above embodiments.

When the device 800 is configured as a receiving end, one of the processors in the processing component 822 may be configured to implement steps of performing the signal detection based on the signal detection network described in the above embodiments.

FIG. 9 is a schematic block diagram showing a device 900 configured to determine a signal detection network according to embodiments of the present disclosure. For example, the device 900 may be a mobile phone, a computer, a digital broadcast terminal, a messaging device, a game console, a tablet device, a medical device, a fitness device, a personal digital assistant, or the like.

Referring to FIG. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, phone calls, data communications, camera operations, and recording operations. The processing component 902 can include one or more processors 920 to execute instructions to perform all or some of the steps in the above-described methods for determining the signal detection network. When the device 900 is configured as a receiving end, the processor 920 may also execute instructions to complete steps of performing the signal detection based on the signal detection network described in embodiments.

Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, videos, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the device 900 is in an operation mode, such as a call mode, a recording mode, and a voice recognition mode. The received audio signal may be further stored in the memory 904 or sent via the communication component 916. In some embodiments, the audio component 910 further includes a speaker to output audio signals.

The I/O interface 912 provides an interface between the processing component 902 and peripheral interface modules, such as keyboards, click wheels, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900. The sensor component 914 may also detect a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may further include a light sensor, such as a CMOS or CCD image sensor, for use in imaging applications. In some embodiments, the sensor component 914 may further include an accelerometer sensor, a gyroscope sensor, a magnetic sensor, a pressure sensor, or a temperature sensor.

The communication component 916 is configured to facilitate communication, wired or wireless, between the device 900 and other devices. The device 900 can access a wireless network based on a communication standard, such as WiFi, 2G or 3G, 4G LTE, 5G NR or a combination thereof. In an illustrative embodiment, the communication component 916 receives a broadcast signal or broadcast associated information from an external broadcast management system via a broadcast channel. In an illustrative embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above method for determining the signal detection network.

In an illustrative embodiment, there is also provided a non-transitory computer readable storage medium including instructions, such as included in the memory 904, executable by the processor 920 in the device 900, for completing the above method for determining the signal detection network. For example, the non-transitory computer-readable storage medium may be a ROM, a random access memory (RAM), a CD-ROM, a magnetic tape, a floppy disc, an optical data storage device, and the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

It is to be noted that in this context, relational terms such as first and second are used solely to distinguish one entity or operation from another entity or operation, it does not necessarily require or imply any such actual relationship or sequence between these entities or operations. The term "include", "comprise" or any other variations thereof refers to a non-exclusive inclusion, so that a process, method, article or device that includes a series of elements does not only include those elements, but also includes other elements that are not explicitly listed, or also includes elements inherent in such a process, method, article or device. Without further restrictions, an element defined by the statement "including a..." does not exclude the existence of other identical elements in the process, method, article or device that includes the element.

The methods, apparatus and devices provided by the embodiments of the present disclosure have been described in detail above, and specific examples are used herein to illustrate the principle and implementations of the present disclosure. The description of the above embodiments is only used to help understand the methods and core ideas of the present disclosure. At the same time, for those skilled in the art, some changes may be made in the specific implementation and application scope according to the idea of the present disclosure. Therefore, the content of the specification should not be construed as a limitation on the present disclosure.

## Claims

1. A method for determining a signal detection network, comprising:

    determining sample communication parameters in communication of a sample transmitting end and a sample receiving end via a sample intelligent reflecting surface (IRS); and
    training an initial neural network based on a training sample set composed of the sample communication parameters to obtain the signal detection network, wherein an input of the initial neural network is the sample communication parameters, and an output of the initial neural network is an estimated value for a transmitted signal of the sample transmitting end.

2. The method according to claim 1, wherein the sample communication parameters comprise at least one of:

    a first channel matrix from the sample transmitting end to the sample IRS;
    a phase matrix of the sample IRS;
    a second channel matrix from the sample IRS to the sample receiving end;
    a third channel matrix from the sample transmitting end to the sample receiving end; and
    a sample receiving signal of the sample receiving end.

3. The method according to claim 2, wherein the initial neural network comprises a plurality of cascaded update units, and inputs of the update unit comprise a unit-common input and a unit-related input;
    the method further comprises:

    determining a relationship between the unit-related input and an updated value of the unit-related input according to a gradient descent process; and
    determining the unit-common input according to a parameter configured to represent the updated value in the relationship, and determining an output of the update unit according to the updated value;
    wherein the output of the update unit is configured as a unit-related input of a cascaded next update unit.

4. The method according to claim 3, wherein the update unit comprises two unit-common inputs;

a first unit-common input in the two unit-common inputs is determined based on the first channel matrix, the phase matrix, the second channel matrix and the third channel matrix; and
a second unit-common input in the two unit-common inputs is determined based on the first channel matrix, the phase matrix, the second channel matrix, the third channel matrix and the sample receiving signal.

5. The method according to claim 3, wherein the update unit comprises three fully connected layers, and the three fully connected layers comprise an input layer, a hidden layer and an output layer.

6. The method according to claim 5, wherein the update unit further comprises a short cut structure, wherein a starting point of the short cut structure is the unit-related input, and an end point of the short cut structure is the hidden layer.

7. The method according to claim 5, wherein network parameters of the fully connected layer comprise a unit-related weight, and the unit-related weight in at least some of the update units is related to a rank of the update unit in the plurality of cascaded update units;
wherein the higher the rank of the update unit in the plurality of cascaded update units, the greater the unit-related weight in the update unit.

8. The method according to claim 7, wherein in the update unit with a rank higher than a preset order, the unit-related weight is a preset value; and
in the update unit with a rank lower than or equal to the preset order, the unit-related weight is less than the preset value, and the higher the rank of the update unit in the plurality of cascaded update units, the greater the unit-related weight in the update unit.

9. A signal detection method, comprising:

receiving a receiving signal from an IRS, wherein the receiving signal is a signal obtained by converting a transmitted signal sent from a transmitting end by the IRS, and
determining the transmitted signal according to the signal detection network determined by the method in any one of claims 1 to 8.

10. An apparatus for determining a signal detection network, comprising:

a parameter determining module configured to determine sample communication parameters in communication of a sample transmitting end and a sample receiving end via a sample intelligent reflecting surface (IRS); and
a network training module configured to train an initial neural network based on a training sample set composed of the sample communication parameters to obtain the signal detection network, wherein an input of the initial neural network is the sample communication parameters, and an output of the initial neural network is an estimated value for a transmitted signal of the sample transmitting end.

11. The apparatus according to claim 10, wherein the sample communication parameters comprise at least one of:

a first channel matrix from the sample transmitting end to the sample IRS;
a phase matrix of the sample IRS;
a second channel matrix from the sample IRS to the sample receiving end;
a third channel matrix from the sample transmitting end to the sample receiving end; and
a sample receiving signal of the sample receiving end.

12. The apparatus according to claim 11, wherein the initial neural network comprises a plurality of cascaded update units, and inputs of the update unit comprise a unit-common input and a unit-related input;
the apparatus further comprises:

a relationship determining module configured to determine a relationship between the unit-related input and an updated value of the unit-related input according to a gradient descent process; and
an input-output determining module configured to determine the unit-common input according to a parameter configured to represent the updated value in the relationship, and determine an output of the update unit according to the updated value;

wherein the output of the update unit is configured as a unit-related input of a cascaded next update unit.

13. The apparatus according to claim 12, wherein the update unit comprises two unit-common inputs;

a first unit-common input in the two unit-common inputs is determined based on the first channel matrix, the phase matrix, the second channel matrix and the third channel matrix; and
a second unit-common input in the two unit-common inputs is determined based on the first channel matrix, the phase matrix, the second channel matrix, the third channel matrix and the sample receiving signal.

14. The apparatus according to claim 12, wherein three fully connected layers comprise an input layer, a hidden layer and an output layer.

15. The apparatus according to claim 14, wherein the update unit further comprises a short cut structure, wherein a starting point of the short cut structure is the unit-related input, and an end point of the short cut structure is the hidden layer.

16. The apparatus according to claim 14, wherein network parameters of the fully connected layer comprise a unit-related weight, and the unit-related weight in at least some of the update units is related to a rank of the update unit in the plurality of cascaded update units;
wherein the higher the rank of the update unit in the plurality of cascaded update units, the greater the unit-related weight in the update unit.

17. The apparatus according to claim 16, wherein in the update unit with a rank higher than a preset order, the unit-related weight is a preset value; and
in the update unit with a rank lower than or equal to the preset order, the unit-related weight is less than the preset value, and the higher the rank of the update unit in the plurality of cascaded update units, the greater the unit-related weight in the update unit.

18. A signal detection apparatus, comprising:
a signal estimating module configured to, in response to receiving a receiving signal from an IRS, wherein the receiving signal is a signal obtained by converting a transmitted signal sent from a transmitting end by the IRS, determine the transmitted signal according to the signal detection network determined by the apparatus in any one of claims 10 to 17.

19. A communication device, comprising:

a processor; and
a memory configured to store computer programs;
wherein when the computer programs are executed by the processor, the method for determining the signal detection network according to any one of claims 1 to 8 is implemented.

20. A communication device, comprising:

a processor; and
a memory configured to store computer programs;
wherein when the computer programs are executed by the processor, the signal detection method according to claim 9 is implemented.

21. A computer-readable storage medium for storing computer programs that, when executed by a processor, cause steps in the method for determining the signal detection network according to any one of claims 1 to 8 to be implemented.

22. A computer-readable storage medium for storing computer programs that, when executed by a processor, cause steps in the signal detection method according to claim 9 to be implemented.

| determining sample communication parameters in communication of a sample transmitting end and a sample receiving end via a sample intelligent reflecting surface (IRS) | S101 |
| --- | --- |
| training an initial neural network based on a training sample set composed of the sample communication parameters to obtain the signal detection network, in which an input of the initial neural network is the sample communication parameters, and an output of the initial neural network is an estimated value for a transmitted signal of the sample transmitting end | S102 |

FIG. 1

| determining sample communication parameters in communication of a sample transmitting end and a sample receiving end via a sample intelligent reflecting surface (IRS) | S101 |
| --- | --- |
| training an initial neural network based on a training sample set composed of the sample communication parameters to obtain the signal detection network, in which an input of the initial neural network is the sample communication parameters, and an output of the initial neural network is an estimated value for a transmitted signal of the sample transmitting end | S102 |
| in response to the receiving end receiving a receiving signal from an IRS, in which the receiving signal is a signal obtained by converting a transmitted signal sent from a transmitting end by the IRS, determining the transmitted signal according to the signal detection network | S201 |

FIG. 2

| | |
|---|---|
| determining sample communication parameters in communication of a sample transmitting end and a sample receiving end via a sample intelligent reflecting surface (IRS) | S101 |

$\downarrow$

| | |
|---|---|
| determining a relationship between the unit-related input and an updated value of the unit-related input according to a gradient descent process | S301 |

$\downarrow$

| | |
|---|---|
| determining the unit-common input according to a parameter configured to represent the updated value in the relationship, and determining an output of the update unit according to the updated value | S302 |

$\downarrow$

| | |
|---|---|
| training an initial neural network based on a training sample set composed of the sample communication parameters to obtain the signal detection network, in which an input of the initial neural network is the sample communication parameters, and an output of the initial neural network is an estimated value for a transmitted signal of the sample transmitting end | S102 |

FIG. 3

$$(\mathbf{H}_2\boldsymbol{\Phi}\mathbf{H}_1 + \mathbf{H}_3)^T \mathbf{y}$$

$\hat{\mathbf{X}}_{i,in}$ → Ui → $\hat{\mathbf{X}}_{i,out}$ → Ui → $\hat{\mathbf{X}}_{i+1,out}$

$$(\mathbf{H}_2\boldsymbol{\Phi}\mathbf{H}_1 + \mathbf{H}_3)^T (\mathbf{H}_2\boldsymbol{\Phi}\mathbf{H}_1 + \mathbf{H}_3)$$

FIG. 4A

FIG. 4B

FIG. 5A

FIG. 5B

$(\mathbf{H}_2\mathbf{\Phi H}_1 + \mathbf{H}_3)^T\mathbf{y}$

$(\mathbf{H}_2\mathbf{\Phi H}_1 + \mathbf{H}_3)^T(\mathbf{H}_2\mathbf{\Phi H}_1 + \mathbf{H}_3)$

$\hat{\mathbf{x}}_{i,in}$

Concat

$w_{1i}$  $\beta_i$  $b_{1i}$  $\rho$

$w_{2i}$  $b_{2i}$

$\psi$

$U_i$

FIG. 5C

apparatus for determining
signal detection network

| parameter determining module | 601 |
| network training module | 602 |

FIG. 6

apparatus for determining
signal detection network

| parameter determining module | 601 |
| relationship determining module | 701 |
| input-output determining module | 702 |
| network training module | 602 |

FIG. 7

800

822

processing
component

wireless
transmitting
/receiving
component

824

antenna
component

826

FIG. 8

900

902

904

memory

processing
component

communication
component

916

906

power
component

920

processor

908

multimedia
component

910

audio
component

sensor
component

914

I/O interface

912

FIG. 9

## INTERNATIONAL SEARCH REPORT

| International application No. |
| --- |
| **PCT/CN2021/087901** |

| A. | CLASSIFICATION OF SUBJECT MATTER |
| --- | --- |

H04L 25/02(2006.01)i

According to International Patent Classification (IPC) or to both national classification and IPC

| B. | FIELDS SEARCHED |
| --- | --- |

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE, 3GPP: 智能反射面, 智能反射表面, 信道估计, 神经网络, 深度学习, 训练, 矩阵, intelligent reflecting surface, IRS, reconfigurable intelligent surface, RIS, large intelligent surface , LIS, channel estimat+, neural network, CNN, DNN, deep learning, training, matrix

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | LIU, Shiyu et al. "Deep Learning Based Channel Estimation for Intelligent Reflecting Surface Aided MISO-OFDM Systems" *IEEE*, 31 December 2020 (2020-12-31), sections 2-3 | 1-22 |
| X | ELBIR, A. M. et al. "Deep Channel Learning for Large Intelligent Surfaces Aided mm-Wave Massive MIMO Systems" *IEEE*, 30 September 2020 (2020-09-30), sections 1-3 | 1-22 |
| X | CN 112134816 A (HANGZHOU DIANZI UNIVERSITY) 25 December 2020 (2020-12-25) description, paragraphs 56-97 | 1-22 |
| A | CN 111817768 A (BEIJING JIAOTONG UNIVERSITY) 23 October 2020 (2020-10-23) entire document | 1-22 |
| A | KR 102192234 B1 (RESEARCH & BUSINESS FOUNDATION SUNGKYUNKWAN UNIVERSITY) 17 December 2020 (2020-12-17) entire document | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 November 2021** | **26 November 2021** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/087901**

| Patent document cited in search report | | | Publication date (day/month/year) | Patent family member(s) | | | Publication date (day/month/year) |
|---|---|---|---|---|---|---|---|
| CN | 112134816 | A | 25 December 2020 | None | | | |
| CN | 111817768 | A | 23 October 2020 | CN | 111817768 | B | 15 June 2021 |
| KR | 102192234 | B1 | 17 December 2020 | US | 2021126359 | A1 | 29 April 2021 |

Form PCT/ISA/210 (patent family annex) (January 2015)